# EUROPEAN PATENT SPECIFICATION

(11) **EP 3 404 880 B1**
(45) Date of publication and mention of the grant of the patent: **25.01.2023**
(21) Application number: 16893951.0
(22) Date of filing: 18.03.2016
(51) Int. Cl.: H04L 25/03, H04L 27/38, H04L 27/26, H04L 25/06, H04B 1/04, H04L 5/00

(54) **SIGNAL PROCESSING METHOD AND RELATED DEVICE**
SIGNALVERARBEITUNGSVERFAHREN UND ZUGEHÖRIGE VORRICHTUNG
PROCÉDÉ DE TRAITEMENT DE SIGNAL ET DISPOSITIF ASSOCIÉ

(43) Date of publication of application: 21.11.2018
(73) Proprietor: Huawei Technologies Co., Ltd., Longgang District Shenzhen, Guangdong 518129 (CN)
(72) Inventor: SI, Xiaoshu, Shenzhen Guangdong 518129 (CN); ZHANG, Li, Shenzhen Guangdong 518129 (CN); SHI, Huaping, Shenzhen Guangdong 518129 (CN); QIU, Yong, Shenzhen Guangdong 518129 (CN)
(74) Representative: Maiwald GmbH
(86) International application number: PCT/CN2016/076800
(87) International publication number: WO 2017/156786

(56) References cited:
- WO-A1-2014/141338
- CN-A- 101 299 656
- CN-A- 104 754 325
- CN-A- 105 099 971
- CN-U- 201 726 421
- CN-U- 201 781 493
- US-B2- 7 499 509
- US-B2- 8 437 425

## Description

### TECHNICAL FIELD

Embodiments of the present invention relate to the field of communications technologies, and specifically, to a signal processing method and a related device.

### BACKGROUND

A power amplifier is an amplifier that can generate maximum output power with a given distortion rate to drive a load (such as a transmitter). Performance of the power amplifier mainly includes linearity and efficiency. The linearity refers to a percentage of a difference between actual output power and ideal output power to the maximum output power. A smaller value of the linearity indicates better linearity. The efficiency refers to a percentage of a difference between output power and input power to total direct current power obtained externally.

WO 2014/141338 A1 describes a signal receiving apparatus, a radio communication system, and a distortion compensation method, wherein signal-receiving device is provided for receiving a signal from a signal-transmitting device is provide d with a distortion reduction unit, a compensation coefficient calculation unit, and a distortion compensation unit.

US 7 499 509 B2 describes multicarrier signal receivers, and more particularly, to receivers for compensating nonlinearly distorted multicarrier signals.

US 8 437 425 B2 describes a distortion compensation device which is configured to receive a transmission signal and subject the received transmission signal to a distortion compensation process for compensating for a nonlinear distortion caused by a transmission power amplifier.

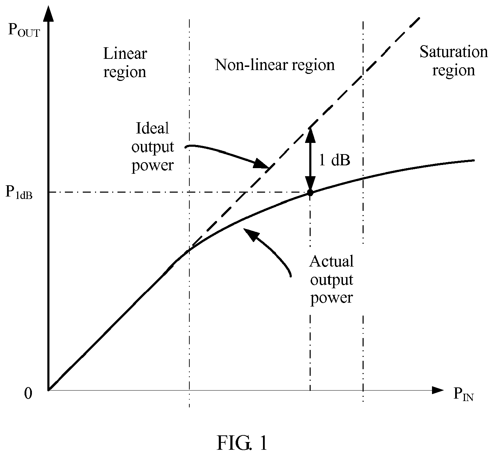

FIG. 1 is a characteristic curve diagram of the power amplifier. A horizontal axis represents input power (P_{IN}, unit: dB), and a vertical axis represents output power (P_{OUT}, unit: dB). It can be learned from FIG. 1 that the characteristic curve is divided into a linear region, a non-linear region, and a saturation region. As P_{IN} increases, P_{OUT} linearly increases in the linear region, and gradually deviates from a linear output value in the non-linear region (this phenomenon is also referred to as non-linear distortion), and finally tends to be stable in the saturation region. A 1-dB working point P_{1dB} exists in the non-linear region (that is, a location at which actual output power deviates from ideal output power by 1 dB). Moving leftward from P_{1dB}, the linearity of the power amplifier becomes better but the efficiency of the power amplifier becomes lower. Moving rightward from P_{1dB}, the efficiency of the power amplifier becomes higher but the linearity of the power amplifier becomes worse (non-linear distortion becomes more severe).

A hybrid fiber coaxial (HFC) network is a hybrid network that combines an optical fiber and a coaxial cable, and includes three parts: a headend equipment room, an optical node, and a subscriber end. The optical node and the subscriber end are connected by using a coaxial cable. Generally, a signal transmitted from the optical node to the subscriber end is attenuated in a transmission line. Therefore, a power amplifier is disposed in the transmission line to compensate for attenuation. However, this increases power consumption of the HFC network. Currently, power consumption of the power amplifier can be reduced to reduce the power consumption of the network. As such, linearity of the power amplifier is reduced, and the power amplifier works in the non-linear region with the input power unchanged. Consequently, non-linear distortion of a signal received by the subscriber end is severe.

### SUMMARY

Aspects of the present invention disclose a signal processing method and a related device as defined by the independent claims, so as to reduce power consumption of an HFC network and further perform non-linear distortion compensation on a signal received by a subscriber end, thereby improving signal quality. Further embodiments are provided in the dependent claims. Further embodiments of the description not falling under the scope of protection of the claims are provided for explanatory purpose only.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a characteristic curve diagram of a power amplifier according to an embodiment of the present invention;
FIG. 2 is a schematic diagram of an architecture of an HFC network according to an embodiment of the present invention;
FIG. 3a is a schematic flowchart of a signal processing method according to an embodiment of the present invention;
FIG. 3b is a schematic diagram of a distorted signal in frequency domain according to an embodiment of the present invention;
FIG. 4 is a schematic flowchart of another signal processing method according to an embodiment of the present invention;
FIG. 5 is a schematic flowchart of still another signal processing method according to an embodiment of the present invention;
FIG. 6 is a schematic structural diagram of a cable modem according to an embodiment of the present invention;
FIG. 7 is a schematic structural diagram of another cable modem according to an embodiment of the present invention; and
FIG. 8 is a schematic structural diagram of still another cable modem according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

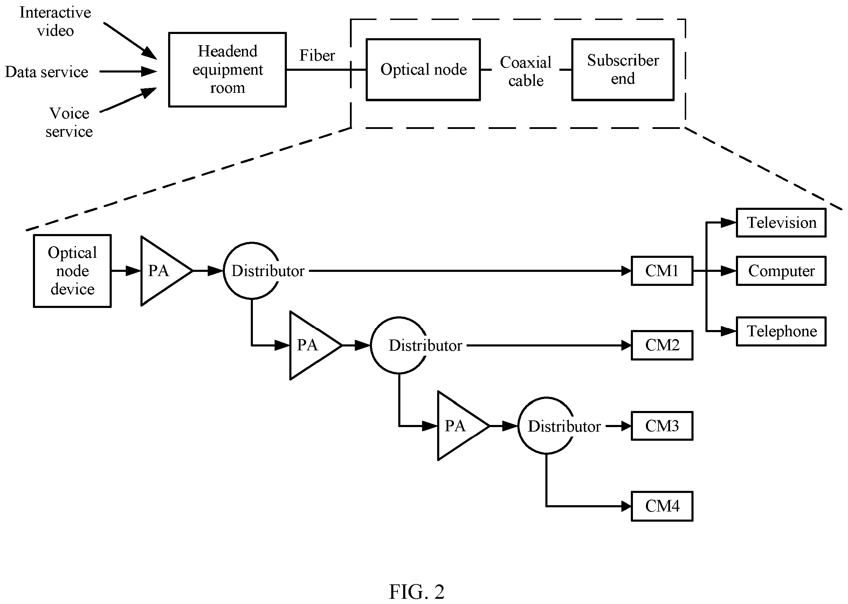

Embodiments of the present invention disclose a signal processing method and a related device, so as to reduce power consumption of an HFC network, and further perform non-linear distortion compensation on a signal received by a subscriber end, thereby improving signal quality. Details are separately described in the following. To better understand the signal processing method and the related device disclosed in the embodiments of the present invention, the following first describes an HFC network architecture applicable to the embodiments of the present invention. Referring to FIG. 2, FIG. 2 is a schematic diagram of an architecture of an HFC network according to an embodiment of the present invention. The architecture shown in FIG. 2 includes three parts: a headend equipment room, an optical node, and a subscriber end. The headend equipment room and the optical node are connected by using an optical fiber, and the optical node and the subscriber end are connected by using a coaxial cable. The optical node mainly includes a distributor and an optical node device with functions of converting an optical signal into an electrical signal and converting a digital signal into an analog signal, such as a cable media converter (CMC). The subscriber end includes a CM and a user terminal, such as a television, a computer, and a telephone.

Therefore, program signals (including electrical signals of various interactive videos and data and voice services) from a cable TV station are first converted into optical signals in the headend equipment room, and the optical signals are transmitted through a fiber. After the optical signals arrive at the optical node, the optical node device converts the optical signals into electrical signals. After being allocated by the distributor, the electrical signals are sent to the subscriber end through a coaxial cable. After the electrical signals arrive at the subscriber end, the CM modulates or demodulates the electrical signals and finally sends the electrical signals to user terminals.

Specifically, at least one power amplifier (PA) is disposed between the optical node device and each CM. The PA is configured to perform power amplification on a signal transmitted in the coaxial cable, so as to compensate for attenuation of the signal in a transmission process in the coaxial cable. The network architecture shown in FIG. 2 provides only some PAs and CMs. A specific quantity of PAs may be determined based on a distance between the optical node device and the CM. This is not limited in this embodiment of the present invention.

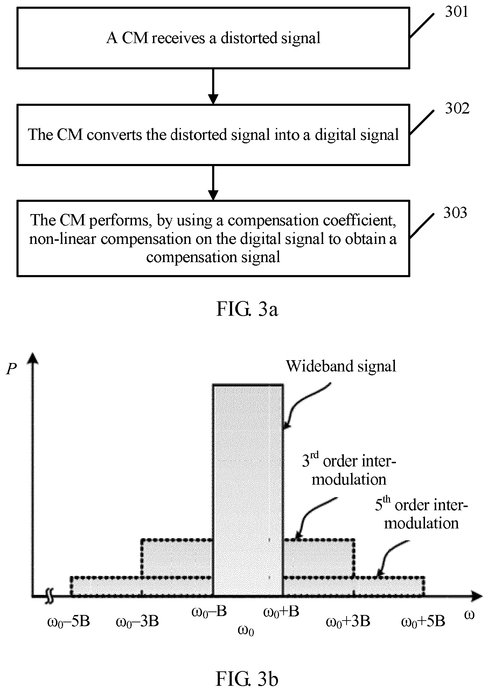

It should be noted that an existing HFC network includes a plurality of power amplifiers. Power consumption of the power amplifiers enlarges power consumption of the HFC network. In view of this, this embodiment of the present invention is provided, so as to reduce power consumption of the HFC network, which is specifically implemented by reducing power consumption of a power amplifier. Based on the architecture shown in FIG. 2, an embodiment of the present invention discloses a signal processing method. Referring to FIG. 3a, FIG. 3a is a schematic flowchart of the signal processing method according to this embodiment of the present invention. As shown in FIG. 3a, the signal processing method may include the following steps.

301. A CM receives a distorted signal.

In this embodiment of the present invention, the distorted signal is obtained after a signal sent by an optical node device to the CM is amplified by at least one power amplifier. Specifically, a light trunk needs to transmit an optical signal, and a coaxial cable needs to transmit an electrical signal. Therefore, the optical node device converts an optical signal received from the light trunk into an electrical signal. Further, if the optical signal is a digital signal, the optical node device further needs to convert the converted electrical signal into an analog signal and then send the analog signal to each CM after the analog signal is amplified by a plurality of power amplifiers. If the optical signal is an analog signal, the optical node device directly sends the analog signal to each CM after the analog signal is amplified by a plurality of power amplifiers. That is, the distorted signal received by the CM is an analog signal.

On a basis of an original HFC network, network power consumption is reduced by reducing power consumption of the power amplifier in this embodiment of the present invention. However, this reduces linearity of the power amplifier. Consequently, when input power remains unchanged, a signal amplified by the power amplifier undergoes severe non-linear distortion. Therefore, in the HFC network, a signal received by the CM is usually a distorted signal. Because distances between CMs and the optical node device vary, distortion degrees of signals received by the CMs may also be different. In this embodiment of the present invention, the HFC network may transmit an orthogonal frequency division multiplexing (OFDM) signal or signals including an OFDM signal and a quadrature amplitude modulation (QAM) signal. This is not limited in this embodiment of the present invention.

In this embodiment of the present invention, after a signal sent by the optical node device to the CM is amplified by at least one power amplifier, inter-modulation distortion occurs in the signal, and a distorted signal finally received by the CM includes a non-linear frequency component. As shown in FIG. 3b, the non-linear frequency component may include at least one of a 3^{rd} order inter-modulation component and a 5^{th} order inter-modulation component.

Referring to FIG. 3b together, FIG. 3b is a schematic diagram of a distorted signal in frequency domain according to an embodiment of the present invention. A signal transmitted in the HFC network is usually a dual-band signal. Then, inter-modulation distortion occurs in an output signal obtained after the signal is amplified by at least one power amplifier. In other words, in comparison with a signal sent by the optical node device, a distorted signal additionally includes a non-linear frequency component. In FIG. 3b, a wideband signal is a signal sent by the optical node device, and a frequency of the wideband signal is from ω₀-B to ω₀+B (including ω₀-B and ω₀+B). After at least one power amplifier amplifies the wideband signal, a 3^{rd} order inter-modulation component is distributed on both sides of the frequency of the wideband signal, in other words, the frequency of the wideband signal is from ω₀-3B to ω₀+3B (including ω₀-3B and ω₀+3B); or even a 5^{th} order inter-modulation component is distributed on both sides of the frequency of the wideband signal, in other words, the frequency of the wideband signal is from ω₀-5B to ω₀+5B (including ω₀-5B and ω₀+5B). The 3^{rd} order inter-modulation component exerts the most greatest impact on the wideband signal, and the 5^{th} order inter-modulation component exerts the second greatest impact.

302. The CM converts the distorted signal into a digital signal.

In this embodiment of the present invention, a signal transmitted in the coaxial cable is an analog signal. Therefore, before performing non-linear compensation on the received distorted signal, the CM needs to perform analog-to-digital conversion (ADC) processing on the distorted signal to obtain the digital signal.

303. The CM performs, by using a compensation coefficient, non-linear compensation on the digital signal to obtain a compensation signal.

In this embodiment of the present invention, the compensation coefficient may be an initialization coefficient, a coefficient obtained by continuously training and updating the initialization coefficient, or a stable coefficient obtained by training and updating the initialization coefficient in a current coefficient update period. This is not limited in this embodiment of the present invention.

Specifically, a specific manner in which the CM performs, by using the compensation coefficient, non-linear compensation on the digital signal to obtain the compensation signal may be implemented by using a least mean square (LMS) algorithm, so as to eliminate the non-linear frequency component included in the distorted signal.

For example, that the CM performs non-linear compensation on the digital signal by using the LMS algorithm may specifically include the following steps:
(1) Assume that the compensation coefficient is w=[0, 0, 1, ..., 0]^{T}, the digital signal is x[n], a length of w is L, which may be specifically 24 or 32 and is not limited in this embodiment of the present invention, and n is a positive integer indicating that the digital signal includes n pieces of data.
(2) Obtain a group of sampling values with a length of L from the digital signal x[n], where the group of sampling values is represented by X[k]=x[k+pos-l:-1:k-(L-pos)], k is a positive integer that is less than or equal to n and that indicates a k^{th} group of sampling values or indicates a k^{th} piece of data in x[n], and pos indicates a position of 1 in the compensation coefficient w. For example, when pos=1, w=[1, 0, 0, ..., 0]^{T}. In other words, when non-linear compensation is performed on the first piece of data in x[k], X[1]=x[pos:-1:1-(L-pos)].
(3) Perform non-linear compensation on a sampling value X[1] by using the compensation coefficient w, to obtain compensated data Z[1]=w*X[1]. Because w=[0, 0, 1, ..., 0]^{T} is a column vector, X[1] is also a column vector. Perform dot multiplication on w and X[1] to obtain Z[1], namely, data obtained after non-linear compensation is performed on the first piece of data.
(4) When performing non-linear compensation on the second piece of data, the CM moves data in X[1] backward for one bit to obtain X[2], and then performs non-linear compensation on X[2] by using the compensation coefficient. The compensation coefficient may be a compensation coefficient for performing non-linear compensation on a previous group of data, or may be a compensation coefficient obtained after a compensation coefficient for performing non-linear compensation on a previous group of data is trained and updated.

It can be learned that in the method described in FIG. 2, after receiving a distorted signal amplified by the power amplifier, the cable modem converts the distorted signal into a digital signal, and performs non-linear compensation on the digital signal by using a compensation coefficient. In this manner, power consumption of the HFC network can be reduced and quality of a signal received by a subscriber end can be improved. Further, because quantities of times for amplifying signals received by CMs at different distances from an optical node device vary, non-linear distortion degrees of signals received by different CMs are different. In this embodiment of the present invention, a subscriber end device (namely, the CM) collectively performs compensation on a final signal, so as to improve a network service capability to some extent.

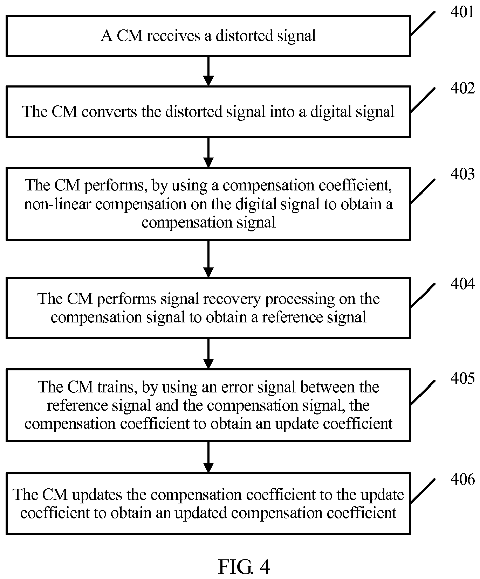

Based on the architecture shown in FIG. 1, an embodiment of the present invention discloses another signal processing method. Referring to FIG. 4, FIG. 4 is a schematic flowchart of the another signal processing method according to this embodiment of the present invention. As shown in FIG. 4, the signal processing method may include the following steps.

401. A CM receives a distorted signal.

The distorted signal is obtained after at least one power amplifier amplifies a signal sent by an optical node device to the CM, and the distorted signal includes a non-linear frequency component.

402. The CM converts the distorted signal into a digital signal.

403. The CM performs, by using a compensation coefficient, non-linear compensation on the digital signal to obtain a compensation signal.

404. The CM performs signal recovery processing on the compensation signal to obtain a reference signal.

In this embodiment of the present invention, after performing non-linear compensation on the digital signal on which ADC processing is performed, the CM further performs signal recovery processing on the compensation signal to compensate for a channel response, so as to obtain the reference signal. The reference signal is relatively similar to the signal sent by the optical node device.

Because an HFC network may transmit only an OFDM signal, or may transmit both an OFDM signal and a QAM signal, the CM performs signal recovery processing on different signals in different manners.

In a specific implementation, in a scenario in which only an OFDM signal is transmitted (the compensation signal is an OFDM signal), a specific method for performing signal recovery processing by the CM on the compensation signal to obtain the reference signal may be as follows:
(11) The CM performs signal recovery processing on the OFDM signal to obtain a first signal; and
(12) The CM determines the first signal as the reference signal.

In a feasible implementation, in a scenario in which both an OFDM signal and a QAM signal exist (the compensation signal includes both an OFDM signal and a QAM signal), a specific method for performing signal recovery processing by the CM on the compensation signal to obtain the reference signal may be as follows:
(21) The CM performs signal recovery processing on the OFDM signal to obtain a first signal, and performs signal recovery processing on the QAM signal to obtain a second signal; and
(22) The CM determines, as the reference signal, a signal obtained by combining the first signal and the second signal.

It should be noted that a main idea of an OFDM technology is as follows: A spectrum of an OFDM signal is first divided into several OFDM channels (for example, each channel is 192 MHz), and then each OFDM channel is divided into several orthogonal subcarriers. In addition, a high-speed data signal is converted into parallel low-speed sub-data streams, and each sub-data stream is carried on a subcarrier. The OFDM signal herein may include OFDM sub-signals carried on one OFDM channel, or may include OFDM sub-signals carried on a plurality of OFDM channels. Therefore, a specific manner in which the CM performs signal recovery processing on the OFDM signal to obtain the first signal may include the following steps:
(111) For an OFDM sub-signal carried on each OFDM channel, the CM performs digital down-conversion (DDC) processing on the OFDM sub-signal, and performs fast Fourier transform (FFT) processing on a signal obtained through the DDC processing to obtain a carrier signal;
(112) The CM performs frequency domain equalization (FEQ) processing on the carrier signal by using a pilot signal, and performs hard decision processing on a signal obtained through the FEQ processing, to obtain a frequency domain signal;
(113) The CM performs inverse fast Fourier transform (IFFT) on the frequency domain signal, and performs digital up-conversion (DUC) processing on a signal obtained through the IFFT processing, to obtain a first sub-signal; and
(114) The CM combines first sub-signals obtained by processing OFDM sub-signals on all OFDM channels, to obtain the first signal.

Specifically, for an OFDM sub-signal carried on each channel, the CM performs DDC processing on the OFDM sub-signal by using a center frequency of the OFDM sub-signal, and the DDC processing mainly includes a frequency downshifting operation and a down-sampling operation. The frequency downshifting means that a wanted spectrum of a digital signal sent by an ADC is moved from an intermediate frequency to a baseband. The down-sampling means that a sampling rate of data obtained after the spectrum is moved is reduced from a high sampling rate level of the ADC to a proper sampling rate level, and decimation is used for implementation. Therefore, a baseband time domain signal may be obtained through DDC processing. Further, the CM performs FFT processing on the baseband time domain signal, so as to convert the baseband time domain signal into a frequency domain signal (namely, a carrier signal). The CM receives a group of pilot signals when receiving the distorted signal. Therefore, after performing FFT processing on the baseband time domain signal, the CM performs FEQ processing on the carrier signal by using the received pilot signals, so as to compensate for a channel response. The pilot signals include some (one or more) frequencies in the signal sent by the optical node device to the CM. In other words, when sending a signal to the CM, the optical node device sends a group of pilot signals of some frequencies extracted from the signal, and the pilot signals also include location information of each frequency in the signal. In this way, the CM may perform FEQ processing on the carrier signal by using an error between frequencies at locations corresponding to the pilot signal and the frequency signal. The CM then performs hard decision on a signal obtained through the FEQ processing, so as to obtain the frequency domain signal. A principle of performing hard decision on the signal obtained through the FEQ processing is to correct a deviated frequency in the signal.

Further, after performing hard decision processing on the signal obtained through the FEQ processing, the CM performs IFFT processing on the obtained frequency domain signal, so as to convert the frequency domain signal into a time domain signal. Then, the CM may perform, based on a center frequency of the signal obtained through the IFFT processing, DUC processing on the signal, so as to obtain a first sub-signal of each channel. Likewise, the DUC processing mainly includes an up-sampling operation and a frequency upshifting operation. Finally, the CM further combines, into the first signal, first sub-signals obtained after each channel undergoes signal recovery processing, so as to serve as the reference signal corresponding to the compensation signal.

Optionally, in a scenario in which both an OFDM signal and a QAM signal exist, the CM performs signal recovery processing on the OFDM signal in a manner same as that used above. The following describes a specific manner of performing signal recovery processing on the QAM signal. Similarly, because a QAM signal may also be transmitted by using a plurality of channels in a transmission process, the QAM signal also includes QAM sub-signals carried on at least one QAM channel. A specific manner in which the CM performs signal recovery processing on the QAM signal to obtain the second signal may also include the following steps:
(211) For a QAM sub-signal carried on each QAM channel, the CM performs DDC processing on the QAM sub-signal to obtain a baseband signal;
(212) The CM performs time domain equalization (TEQ) processing on the baseband signal, and performs hard decision processing on a signal obtained through the TEQ processing to obtain a time domain signal;
(213) The CM performs DUC processing on the time domain signal to obtain a second sub-signal; and
(214) The CM combines second sub-signals obtained by processing QAM sub-signals on all QAM channels, to obtain the second signal.

Specifically, for a QAM sub-signal carried on each QAM channel, the CM first performs DDC processing on the QAM sub-signal, that is, performs frequency downshifting and down-sampling processing, so as to obtain a baseband time domain signal, and then performs TEQ processing on the baseband time domain signal to compensate for a channel response.

Further, the CM performs hard decision processing on a signal obtained through the TEQ processing, so as to obtain a time domain signal, and performs DUC processing (up-sampling and frequency upshifting) on the time domain signal, so as to obtain a second sub-signal. Finally, the CM combines second sub-signals obtained after all QAM channels undergo signal recovery processing, to obtain the second signal. In this case, a signal combined by the second signal and the first signal may serve as the reference signal corresponding to the compensation signal.

405. The CM trains, by using an error signal between the reference signal and the compensation signal, the compensation coefficient to obtain an update coefficient.

In this embodiment of the present invention, after obtaining the reference signal by performing signal recovery processing on the compensation signal, the CM may calculate an error between the reference signal and the compensation signal, so as to obtain the error signal, and then train the compensation coefficient by using the error signal, to obtain a group of update coefficients.

Specifically, a specific manner in which the CM trains the compensation coefficient by using the error signal, to obtain the update coefficient may be as follows: It is assumed that a digital signal is represented by x[n], and non-linear compensation is performed on data that is with a length of L and that is obtained from x[n]; a k^{th} group of signals is represented by X[k], and non-linear compensation is performed on X[k] by using a compensation coefficient w(k), to obtain a compensation signal z[k]; the compensation signal z[k] is a signal obtained by performing non-linear compensation on a k^{th} piece of data in x[n], and signal recovery processing is performed on z[k] to obtain a reference signal d[k]; and w(k) represents a compensation coefficient for performing non-linear compensation on a k^{th} group of data, and is a column vector with L rows and one column. Therefore, an update coefficient q may be obtained by using the following formula: q=w (k)+2^{∗}mu^{∗}conj(e[k])^{∗}X[k], where e[k]=d[k]-z[k] indicates an error signal, mu is a preset coefficient and is a fixed value, and conj(e[k]) represents obtaining a conjugate of the error signal e[k].

406. The CM updates the compensation coefficient to the update coefficient to obtain an updated compensation coefficient.

In this embodiment of the present invention, the CM trains the compensation coefficient by using the error signal, and after obtaining the update coefficient, updates a currently used compensation coefficient to the update coefficient. In this way, when non-linear compensation is performed on a next group of digital signals, the CM may perform non-linear compensation on the digital signals by using the updated compensation coefficient, that is, w(k+1)=q=w(k)+2*mu*conj(e[k])*X[k]. In other words, a compensation coefficient for performing non-linear compensation on a current group of digital signals is obtained from previous coefficient training.

For example, it is assumed that a compensation coefficient used for performing non-linear compensation on the first group of signals is a preset initialization coefficient denoted as w(1). After performing non-linear compensation on the first group of signals, the CM trains and updates the initialization coefficient to obtain an updated compensation coefficient denoted as w(2), and then the CM may perform non-linear compensation on a second group of signals by using w(2). It can be learned that the CM performs non-linear compensation on the k^{th} group of signals by using the compensation coefficient w(k) obtained after a (k-1)^{th} update.

It can be learned that in the method described in FIG. 4, the CM performs non-linear compensation on the k^{th} group of signals by using the compensation coefficient obtained after the (k-1)^{th} update, then obtains the reference signal through signal recovery processing, and trains, by using the error signal between the reference signal and the compensation signal, the compensation coefficient obtained after the (k-1)^{th} update, so as to obtain the update coefficient, and the update coefficient may serve as a compensation coefficient used for performing non-linear compensation processing on a (k+1)^{th} group of signals. Precision of performing non-linear compensation processing on the distorted signal can be improved by continuously training and updating the compensation coefficient. Therefore, quality of a signal finally received by a subscriber end can be improved.

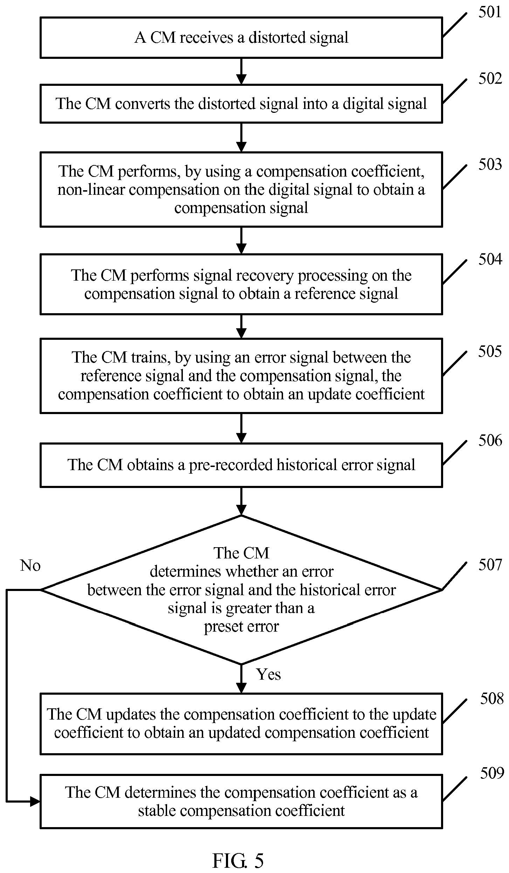

Based on the architecture shown in FIG. 1, an embodiment of the present invention discloses still another signal processing method. Referring to FIG. 5, FIG. 5 is a schematic flowchart of the still another signal processing method according to this embodiment of the present invention. As shown in FIG. 5, the signal processing method may include the following steps.

501. A CM receives a distorted signal.

The distorted signal is obtained after at least one power amplifier amplifies a signal sent by an optical node device to the CM, and the distorted signal includes a non-linear frequency component.

502. The CM converts the distorted signal into a digital signal.

503. The CM performs, by using a compensation coefficient, non-linear compensation on the digital signal to obtain a compensation signal.

504. The CM performs signal recovery processing on the compensation signal to obtain a reference signal.

505. The CM trains, by using an error signal between the reference signal and the compensation signal, the compensation coefficient to obtain an update coefficient.

In this embodiment of the present invention, after training the compensation coefficient by using the error signal, the CM records the error signal to determine whether the compensation signal obtained through non-linear compensation is stable. 506. The CM obtains a pre-recorded historical error signal.

In this embodiment of the present invention, the historical error signal is an error signal between a historical reference signal obtained by performing non-linear compensation on a previous group of digital signals in a current compensation coefficient update period and a historical compensation signal. In other words, the CM periodically updates the compensation coefficient. The compensation coefficient update period may be 10 ms, and this is not limited in this embodiment of the present invention.

It should be noted that if the update coefficient is obtained by training the compensation coefficient for the first time in the current compensation coefficient update period, the CM directly updates the compensation coefficient to the update coefficient after obtaining the update coefficient, and after receiving a next group of distorted signals, performs non-linear compensation on the next group of distorted signals by using the updated compensation coefficient. If the update coefficient is an updated compensation coefficient obtained by training the compensation coefficient for a k^{th} time in the current compensation coefficient update period, where k is a positive integer greater than or equal to 2, the CM first obtains a historical error signal between a historical reference signal obtained by performing non-linear compensation processing on a digital signal for a (k-1)^{th} time and a historical compensation signal.

507. The CM determines whether an error between the error signal and the historical error signal is greater than a preset error; and performs step 508 if the error is greater than the preset error, or performs step 509 if the error is not greater than the preset error.

In this embodiment of the present invention, after obtaining the historical error signal, the CM calculates the error between the error signal and the historical error signal, so as to determine whether the compensation signal obtained after non-linear compensation is stable by determining whether the error is greater than the preset error.

To be specific, if an error between an error signal between a compensation signal obtained after previous non-linear compensation and the reference signal, and an error signal between a compensation signal obtained after current non-linear compensation and the reference signal is relatively small (in other words, the error is less than or equal to the preset error), the CM may consider that it is relatively stable to perform non-linear compensation on the digital signal by using a current compensation coefficient. Therefore, the compensation coefficient may not be further updated in the current compensation coefficient update period. If an error between an error signal between a compensation signal obtained after previous non-linear compensation and the reference signal, and an error signal between a compensation signal obtained after current non-linear compensation and the reference signal is relatively large (in other words, the error is greater than the preset error), the CM updates the current compensation coefficient to the update coefficient. The compensation coefficient is cyclically updated in this manner until a stable error signal is finally obtained.

508. The CM updates the compensation coefficient to the update coefficient to obtain an updated compensation coefficient.

The updated compensation coefficient is used to perform non-linear compensation on a next group of digital signals.

509. The CM determines the compensation coefficient as a stable compensation coefficient.

In this embodiment of the present invention, the stable compensation coefficient is used to perform non-linear compensation on all digital signals in the current compensation coefficient update period. To be specific, if the error signal is less than the historical error signal, the CM may consider that the error between the compensation signal obtained through non-linear compensation and the reference signal tends to be stable. To improve efficiency of non-linear compensation performed on a signal, the CM is not to further update the compensation coefficient within the current compensation coefficient update period.

Further, when a next compensation coefficient update period starts, the CM re-updates the compensation coefficient until the error signal is stable. It should be noted that when the next compensation coefficient update period starts, a compensation coefficient used for performing non-linear compensation processing may be a preset initialization coefficient, or may be a stable compensation coefficient obtained in the current compensation coefficient update period. This is not limited in this embodiment of the present invention.

For example, it is assumed that non-linear compensation is performed on the digital signal for the first time in the current compensation coefficient update period, and the compensation coefficient may be a preset initialization coefficient qi. After non-linear compensation is performed on the digital signal for a k^{th} time, if an error between the error signal between the compensation signal and the reference signal, and a historical error signal obtained through (k-1)^{th} non-linear compensation is relatively small, the CM may use a currently used compensation coefficient qₖ₋₁ as a stable compensation coefficient in the current period. In this period, the CM performs, by always using qₖ₋₁, non-linear compensation on a digital signal obtained after analog-to-digital conversion is performed on the distorted signal. Further, when a next compensation coefficient update period starts, the CM re-updates the compensation coefficient. In this case, a compensation coefficient used for performing non-linear compensation on the digital signal obtained after analog-to-digital conversion is performed on the distorted signal for the first time may be qₖ₋₁ or the initialization coefficient q₁. This is not limited in this embodiment of the present invention.

It can be learned that in the method described in FIG. 5, the CM periodically updates the compensation coefficient. In one period, if an error signal between a compensation signal obtained after non-linear compensation is performed on a digital signal by using a compensation coefficient, and a reference signal is relatively stable, the CM is not to further update the compensation coefficient within the current period, and performs non-linear compensation on the digital signal by always using the compensation coefficient within the current period. If the error signal between the compensation signal obtained after non-linear compensation is performed on the digital signal by using the compensation coefficient, and the reference signal is unstable, the CM continuously updates the compensation coefficient until the error signal is stable. The compensation coefficient is periodically updated, and the compensation coefficient is not further updated when the error signal is stable within one period. In this way, precision of non-linear compensation can be improved. Therefore, quality of a signal received by a subscriber end and efficiency of non-linear compensation performed on the distorted signal are improved.

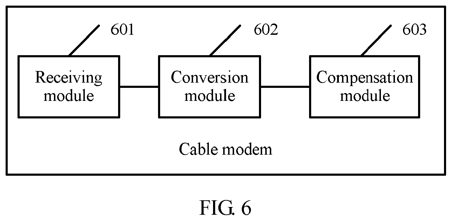

Based on the architecture shown in FIG. 1, an embodiment of the present invention discloses a cable modem. Referring to FIG. 6, FIG. 6 is a schematic structural diagram of the cable modem according to this embodiment of the present invention. As shown in FIG. 6, the CM may include:
a receiving module 601, configured to receive a distorted signal, where the distorted signal is obtained after at least one power amplifier in an HFC network amplifies a signal sent by an optical node device to the CM, the distorted signal includes a non-linear frequency component, and the non-linear frequency component includes at least one of a 3^{rd} order inter-modulation component and a 5^{th} order inter-modulation component;
a conversion module 602, configured to convert the distorted signal received by the receiving module 601 into a digital signal; and
a compensation module 603, configured to perform, by using a compensation coefficient, non-linear compensation on the digital signal to obtain a compensation signal, so as to eliminate the non-linear frequency component.

In this embodiment of the present invention, the compensation coefficient may be an initialization coefficient, a coefficient obtained by continuously training and updating the initialization coefficient, or a stable coefficient obtained by training and updating the initialization coefficient in a current coefficient update period. This is not limited in this embodiment of the present invention.

Specifically, the compensation module 603 may perform non-linear compensation on the digital signal by using the compensation coefficient in combination with an LMS algorithm and the like.

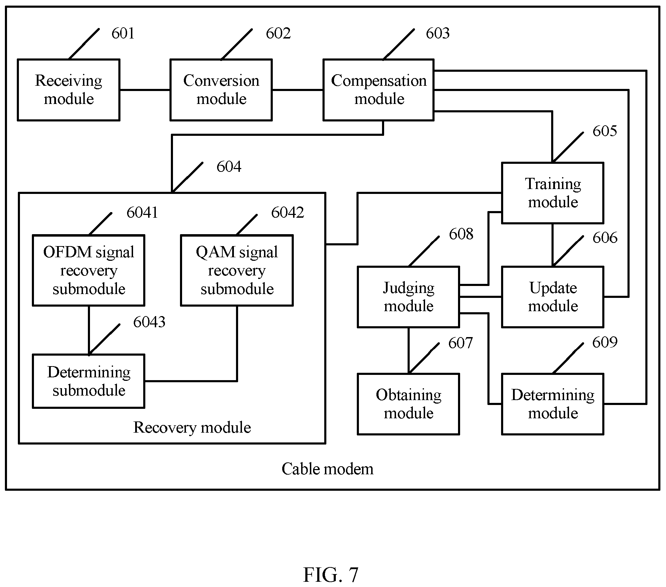

Referring to FIG. 7 together, FIG. 7 is a schematic structural diagram of another cable modem according to an embodiment of the present invention. The CM shown in FIG. 7 is obtained by optimizing the CM shown in FIG. 6. As shown in FIG. 7, the CM may further include a recovery module 604, a training module 605, and an update module 606.

The recovery module 604 is configured to perform signal recovery processing on the compensation signal obtained by performing non-linear compensation by the compensation module 603, to obtain a reference signal.

In this embodiment of the present invention, the reference signal obtained by performing signal recovery processing by the recovery module 604 can compensate for a channel response, so that the reference signal is relatively similar to the signal sent by an optical node device.

The training module 605 is configured to calculate an error signal between the reference signal obtained by performing signal recovery processing by the recovery module 604 and the compensation signal obtained by performing non-linear compensation by the compensation module 603, and train, by using the error signal, the compensation coefficient to obtain an update coefficient.

The update module 606 is configured to update the compensation coefficient to the update coefficient obtained through training performed by the training module 605, to obtain an updated compensation coefficient, where the updated compensation coefficient is used to perform non-linear compensation on a next group of digital signals.

In other words, after the update module 606 updates the compensation coefficient to the update coefficient to obtain the updated compensation coefficient, the compensation module 603 performs non-linear compensation on the next group of digital signals by using the updated compensation coefficient.

Precision of performing non-linear compensation processing on the distorted signal can be improved by continuously training and updating the compensation coefficient. Therefore, quality of a signal finally received by a subscriber end can be improved.

In a feasible implementation, the recovery module 604 may include an OFDM signal recovery submodule 6041, a QAM signal recovery submodule 6042, and a determining submodule 6043.

When the HFC network transmits only an OFDM signal in a downstream line, the compensation signal obtained by performing non-linear compensation by the compensation module 603 is an OFDM signal.

Therefore, the OFDM signal recovery submodule 6041 is configured to perform signal recovery processing on the OFDM signal to obtain a first signal.

The determining submodule 6043 is configured to determine the first signal as the reference signal.

When the HFC network transmits both an OFDM signal and a QAM signal in a downstream line, the compensation signal obtained by performing non-linear compensation by the compensation module 603 includes an OFDM signal and a QAM signal.

Therefore, the OFDM signal recovery submodule 6041 is configured to perform signal recovery processing on the OFDM signal to obtain a first signal;
the QAM signal recovery submodule 6042 is configured to perform signal recovery processing on the QAM signal to obtain a second signal; and
the determining submodule 6043 is configured to determine, as the reference signal, a signal obtained by combining the first signal and the second signal.

Further, because an OFDM signal is usually transmitted by using a plurality of channels in a transmission process, the OFDM signal usually includes OFDM sub-signals carried on a plurality of OFDM channels, and a specific manner in which the OFDM signal recovery submodule 6041 performs signal recovery processing on the OFDM signal to obtain the first signal may be:
for an OFDM sub-signal carried on each OFDM channel, performing DDC processing on the OFDM sub-signal, and performing FFT processing on a signal obtained through the DDC processing, to obtain a carrier signal;
performing FEQ processing on the carrier signal by using a pilot signal, and performing hard decision processing on a signal obtained through the FEQ processing, to obtain a frequency domain signal, where the pilot signal includes at least one frequency of a signal sent by the optical node device to the CM, and the CM receives the pilot signal when receiving the distorted signal;
performing IFFT processing on the frequency domain signal, and performing DUC processing on a signal obtained through the IFFT processing, to obtain a first sub-signal; and
combining first sub-signals obtained by processing OFDM sub-signals on all OFDM channels, to obtain the first signal.

Optionally, because a QAM signal may also be transmitted by using a plurality of channels in a transmission process, the QAM signal also includes QAM sub-signals carried on at least one QAM channel. Therefore, a specific manner in which the QAM signal recovery submodule 6042 performs signal recovery processing on the QAM signal to obtain the second signal may be:
for a QAM sub-signal carried on each QAM channel, performing DDC processing on the QAM sub-signal to obtain a baseband signal;
performing TEQ processing on the baseband signal, and performing hard decision processing on a signal obtained through the TEQ processing, to obtain a time domain signal;
performing DUC processing on the time domain signal to obtain a second sub-signal; and
combining second sub-signals obtained by processing QAM sub-signals on all QAM channels, to obtain the second signal.

In another feasible implementation, the CM may further include:
an obtaining module 607, configured to obtain a pre-recorded historical error signal, where
the historical error signal is an error signal between a historical reference signal obtained by performing non-linear compensation on a previous group of digital signals in a current compensation coefficient update period and a historical compensation signal, in other words, the CM periodically updates the compensation coefficient, a compensation coefficient update period may be 10 ms, and this is not limited in this embodiment of the present invention; and
a judging module 608, configured to determine whether an error between the error signal obtained by the training module 605 and the historical error signal obtained by the obtaining module 607 is less than a preset error. If the error is greater than the preset error, the update module 606 updates the compensation coefficient to the update coefficient to obtain the updated compensation coefficient.

In still another feasible implementation, the CM may further include:
a determining module 609, configured to determine the compensation coefficient as a stable compensation coefficient when the judging module 608 determines that the error is less than or equal to the preset error, where the stable compensation coefficient is used to perform non-linear compensation on a digital signal in the current compensation coefficient update period.

In other words, after the determining module 609 determines the compensation coefficient as the stable compensation coefficient, the compensation module 603 performs non-linear compensation on the digital signal by using the stable compensation coefficient in the current compensation coefficient update period.

The compensation coefficient is periodically updated, and the compensation coefficient is not to be further updated when the error signal is stable within one period. In this way, precision of non-linear compensation can be improved. Therefore, quality of a signal received by the subscriber end and efficiency of non-linear compensation performed on the distorted signal are improved.

It can be learned that in the cable modem described in FIG. 6 and FIG. 7, after receiving a distorted signal amplified by the power amplifier, the cable modem converts the distorted signal into a digital signal, and performs non-linear compensation on the digital signal by using a compensation coefficient. In this manner, power consumption of the HFC network can be reduced, and quality of a signal received by the subscriber end can be improved. Further, because quantities of times for amplifying signals received by CMs at different distances from an optical node device vary, non-linear distortion degrees of signals received by different CMs are different. In this embodiment of the present invention, a subscriber end device (namely, the CM) collectively performs compensation on a final signal, so as to improve a network service capability to some extent.

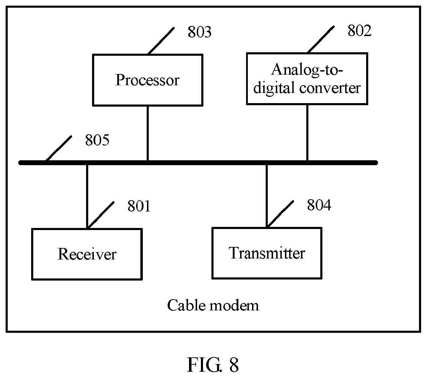

Referring to FIG. 8, FIG. 8 is a schematic structural diagram of still another cable modem according to an embodiment of the present invention. The CM described in FIG. 8 may include a receiver 801, an analog-to-digital converter 802, at least one processor 803, a transmitter 804, and a communications bus 805.

The transmitter 804 is configured to send, to each user terminal of a subscriber end, a compensation signal obtained after the CM performs non-linear compensation on a signal.

The communications bus 805 is configured to implement communicative connections between the receiver 801, the analog-to-digital converter 802, the processor 803, and the transmitter 804.

The receiver 801 is configured to receive a distorted signal, where the distorted signal is obtained after at least one power amplifier in an HFC network amplifies a signal sent by an optical node device to the CM, the distorted signal includes a non-linear frequency component, and the non-linear frequency component includes at least one of a 3^{rd} order inter-modulation component and a 5^{th} order inter-modulation component.

The analog-to-digital converter 802 is configured to convert the distorted signal received by the receiver 801 into a digital signal.

The processor 803 is configured to perform, by using a compensation coefficient, non-linear compensation on the digital signal to obtain a compensation signal, so as to eliminate the non-linear frequency component.

In this embodiment of the present invention, the compensation coefficient may be an initialization coefficient, a coefficient obtained by continuously training and updating the initialization coefficient, or a stable coefficient obtained by training and updating the initialization coefficient in a current coefficient update period. This is not limited in this embodiment of the present invention.

Specifically, the processor 803 may perform non-linear compensation on the digital signal by using the compensation coefficient in combination with an LMS algorithm and the like.

In a feasible implementation, the processor 803 is further configured to: after performing, by using the compensation coefficient, non-linear compensation on the digital signal to obtain the compensation signal, perform signal recovery processing on the compensation signal to obtain a reference signal; train, by using an error signal between the reference signal and the compensation signal, the compensation coefficient to obtain an update coefficient; and update the compensation coefficient to the update coefficient to obtain an updated compensation coefficient, where the updated compensation coefficient is used to perform non-linear compensation on a next group of digital signals.

Precision of performing non-linear compensation processing on the distorted signal can be improved by continuously training and updating the compensation coefficient. Therefore, quality of a signal finally received by the subscriber end can be improved. In another feasible implementation, when the HFC network transmits only an OFDM signal in a downstream line, the compensation signal is an OFDM signal.

Therefore, a specific manner in which the processor 803 performs signal recovery processing on the compensation signal to obtain the reference signal may be:
performing signal recovery processing on the OFDM signal to obtain a first signal; and
determining the first signal as the reference signal.

In still another feasible implementation, when the HFC network transmits both an OFDM signal and a QAM signal in a downstream line, the compensation signal includes an OFDM signal and a QAM signal.

Therefore, a specific manner in which the processor 803 performs signal recovery processing on the compensation signal to obtain the reference signal may be:
performing signal recovery processing on the OFDM signal to obtain a first signal, and performing signal recovery processing on the QAM signal to obtain a second signal; and
determining, as the reference signal, a signal obtained by combining the first signal and the second signal.

In still another feasible implementation, because an OFDM signal is usually transmitted by using a plurality of channels in a transmission process, the OFDM signal usually includes OFDM sub-signals carried on a plurality of OFDM channels, and a specific manner in which the processor 803 performs signal recovery processing on the OFDM signal to obtain the first signal may be:
for an OFDM sub-signal carried on each OFDM channel, performing DDC processing on the OFDM sub-signal, and performing FFT processing on a signal obtained through the DDC processing, to obtain a carrier signal;
performing FEQ processing on the carrier signal by using a pilot signal, and performing hard decision processing on a signal obtained through the FEQ processing, to obtain a frequency domain signal, where the pilot signal includes at least one frequency of a signal sent by the optical node device to the CM, and the CM receives the pilot signal when receiving the distorted signal;
performing IFFT processing on the frequency domain signal, and performing DUC processing on a signal obtained through the IFFT processing, to obtain a first sub-signal; and
combining first sub-signals obtained by processing OFDM sub-signals on all OFDM channels, to obtain the first signal.

In still another feasible implementation, because a QAM signal may also be transmitted by using a plurality of channels in a transmission process, the QAM signal also includes QAM sub-signals carried on at least one QAM channel. Therefore, a specific manner in which the processor 803 performs signal recovery processing on the QAM signal to obtain the second signal may be:
for a QAM sub-signal carried on each QAM channel, performing DDC processing on the QAM sub-signal to obtain a baseband signal;
performing TEQ processing on the baseband signal, and performing hard decision processing on a signal obtained through the TEQ processing, to obtain a time domain signal;
performing DUC processing on the time domain signal to obtain a second sub-signal; and
combining second sub-signals obtained by processing QAM sub-signals on all QAM channels, to obtain the second signal.

In still another feasible implementation, the processor 803 is further configured to: after training, by using the error signal between the reference signal and the compensation signal, the compensation coefficient to obtain the update coefficient, obtain a pre-recorded historical error signal, and determine whether an error between the error signal and the historical error signal is greater than a preset error.

The historical error signal is an error signal between a historical reference signal obtained by performing non-linear compensation on a previous group of digital signals in a current compensation coefficient update period and a historical compensation signal. In other words, the CM periodically updates the compensation coefficient. A compensation coefficient update period may be 10 ms, and this is not limited in this embodiment of the present invention.

Therefore, a specific manner in which the processor 803 updates the compensation coefficient to the update coefficient to obtain the updated compensation coefficient is:
when the error is greater than the preset error, updating the compensation coefficient to the update coefficient to obtain the updated compensation coefficient.

In still another feasible implementation, the processor 803 is further configured to determine the compensation coefficient as a stable compensation coefficient when the error is less than or equal to the preset error, where the stable compensation coefficient is used to perform non-linear compensation on a digital signal in the current compensation coefficient update period.

The compensation coefficient is periodically updated, and the compensation coefficient is not to be further updated when the error signal is stable within one period. In this way, precision of non-linear compensation can be improved. Therefore, quality of a signal received by the subscriber end and efficiency of non-linear compensation performed on the distorted signal are improved.

It can be learned that in the cable modem described in FIG. 8, after receiving a distorted signal amplified by the power amplifier, the cable modem converts the distorted signal into a digital signal, and performs non-linear compensation on the digital signal by using a compensation coefficient. In this manner, power consumption of the HFC network can be reduced, and quality of a signal received by the subscriber end can be improved. Further, because quantities of times for amplifying signals received by CMs at different distances from an optical node device vary, non-linear distortion degrees of signals received by different CMs are different. In this embodiment of the present invention, a subscriber end device (namely, the CM) collectively performs compensation on a final signal, so as to improve a network service capability to some extent.

It should be noted that, in the foregoing embodiments, the description of each embodiment has respective focuses. For a part that is not described in detail in an embodiment, reference may be made to related descriptions in other embodiments. In addition, a person skilled in the art should also appreciate that all the embodiments described in the specification are preferred embodiments, and the related actions and modules are not necessarily mandatory to the present invention.

Sequence adjustment, merging, or removing may be performed on the steps of the method in the embodiments of the present invention based on an actual requirement.

The modules in the cable modem in the embodiments of the present invention may be combined, divided, and deleted based on an actual requirement.

The cable modem in the embodiments of the present invention may be implemented by a universal integrated circuit, such as a CPU (Central Processing Unit, central processing unit) or an ASIC (Application-Specific Integrated Circuit, application-specific integrated circuit).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM), or a random access memory (RAM).

The signal processing method and the related device disclosed in the embodiments of the present invention are described in detail above. Principles and implementations of the present invention are described herein by using specific examples. The description of the foregoing embodiments is merely provided to help understand the present invention and core ideas of the present invention. In addition, a person of ordinary skill in the art can make variations to the present invention in terms of the specific implementations and application scopes according to the ideas of the present invention. Therefore, the content of the specification shall not be construed as a limit to the present invention as defined by the claims.

## Claims

1. A signal processing method, applied to a hybrid fiber coaxial, HFC, network, wherein the HFC network comprises at least one power amplifier and a cable modem, CM, and the method comprises:
receiving (301), by the CM, a distorted signal, wherein the distorted signal comprises a non-linear frequency component generated after the at least one power amplifier amplifies a signal;
converting (302), by the CM, the distorted signal into a digital signal; and
performing (303), by the CM by using a compensation coefficient, non-linear compensation on the digital signal to obtain a compensation signal;
wherein after the performing, by the CM by using a compensation coefficient, non-linear compensation on the digital signal to obtain a compensation signal, the method further comprises:
performing, by the CM, signal recovery processing on the compensation signal to obtain a reference signal;
training, by the CM by using an error signal between the reference signal and the compensation signal, the compensation coefficient to obtain an update coefficient; and
updating, by the CM, the compensation coefficient to the update coefficient to obtain an updated compensation coefficient, wherein the updated compensation coefficient is used to perform non-linear compensation on a next group of digital signals;
wherein after the training, by the CM by using an error signal between the reference signal and the compensation signal, the compensation coefficient to obtain an update coefficient, the method further comprises:
obtaining, by the CM, a pre-recorded historical error signal, wherein the historical error signal is an error signal between a historical reference signal obtained by performing non-linear compensation on a previous group of digital signals in a current compensation coefficient update period and a historical compensation signal; and
determining, by the CM, whether an error between the error signal and the historical error signal is greater than a preset error; and
the updating, by the CM, the compensation coefficient to the update coefficient to obtain an updated compensation coefficient comprises:
if the error is greater than the preset error, updating, by the CM, the compensation coefficient to the update coefficient to obtain the updated compensation coefficient.

2. The method according to claim 1, wherein the non-linear frequency component comprises at least one of a 3^{rd} order inter-modulation component and a 5^{th} order inter-modulation component.

3. The method according to claim 1, wherein the compensation signal comprises an orthogonal frequency division multiplexing, OFDM, signal, and the performing, by the CM, signal recovery processing on the compensation signal to obtain a reference signal comprises:
performing, by the CM, signal recovery processing on the OFDM signal to obtain a first signal; and
determining, by the CM, the first signal as the reference signal.

4. The method according to claim 1, wherein the compensation signal comprises an OFDM signal and a quadrature amplitude modulation, QAM, signal, and the performing, by the CM, signal recovery processing on the compensation signal to obtain a reference signal comprises:
performing, by the CM, signal recovery processing on the OFDM signal to obtain a first signal, and performing signal recovery processing on the QAM signal to obtain a second signal; and
determining, by the CM as the reference signal, a signal obtained by combining the first signal and the second signal.

5. The method according to claim 3 or 4, wherein the OFDM signal comprises OFDM sub-signals carried on at least one OFDM channel, and the performing, by the CM, signal recovery processing on the OFDM signal to obtain a first signal comprises:
performing, by the CM, digital down-conversion, DDC, processing on an OFDM sub-signal carried on each OFDM channel, and performing fast Fourier transform FFT on a signal obtained through the DDC processing, to obtain a carrier signal;
performing, by the CM, frequency domain equalization, FEQ, processing on the carrier signal by using a pilot signal, and performing hard decision processing on a signal obtained through the FEQ processing, to obtain a frequency domain signal, wherein the pilot signal comprises at least one frequency of a signal sent by an optical node device to the CM;
performing, by the CM, inverse fast Fourier transform IFFT on the frequency domain signal, and performing digital up-conversion, DUC, processing on a signal obtained through the IFFT processing, to obtain a first sub-signal; and
combining, by the CM, all first sub-signals to obtain the first signal.

6. The method according to claim 4,
wherein the QAM signal comprises QAM sub-signals carried on at least one QAM channel, and the performing, by the CM, signal recovery processing on the QAM signal to obtain a second signal comprises:
performing, by the CM, DDC processing on a QAM sub-signal carried on each QAM channel to obtain a baseband signal;
performing, by the CM, time domain equalization, TEQ, processing on the baseband signal, and performing hard decision processing on a signal obtained through the TEQ processing, to obtain a time domain signal;
performing, by the CM, DUC processing on the time domain signal to obtain a second sub-signal; and
combining, by the CM, all second sub-signals to obtain the second signal.

7. The method according to any one of claims 1 to 6, wherein the method further comprises:
determining, by the CM, the compensation coefficient as a stable compensation coefficient if the error is less than or equal to the preset error, wherein the stable compensation coefficient is used to perform non-linear compensation on a digital signal in the current compensation coefficient update period.

8. A CM, applied to an HFC network, wherein the HFC network further comprises at least one power amplifier, and the CM comprises:
a receiving module (601), configured to receive a distorted signal, wherein the distorted signal comprises a non-linear frequency component generated after the at least one power amplifier amplifies a signal;
a conversion module (602), configured to convert the distorted signal into a digital signal; and
a compensation module (603), configured to perform, by using a compensation coefficient, non-linear compensation on the digital signal to obtain a compensation signal;
wherein the CM further comprises:
a recovery module (604), configured to perform signal recovery processing on the compensation signal to obtain a reference signal;
a training module (605), configured to train, by using an error signal between the reference signal and the compensation signal, the compensation coefficient to obtain an update coefficient; and
an update module (606), configured to update the compensation coefficient to the update coefficient to obtain an updated compensation coefficient, wherein the updated compensation coefficient is used to perform non-linear compensation on a next group of digital signals; wherein the CM further comprises:
an obtaining module, configured to obtain a pre-recorded historical error signal, wherein the historical error signal is an error signal between a historical reference signal obtained by performing non-linear compensation on a previous group of digital signals in a current compensation coefficient update period and a historical compensation signal; and
a judging module, configured to determine whether an error between the error signal and the historical error signal is greater than a preset error; and
a specific manner in which the update module updates the compensation coefficient to the update coefficient to obtain the updated compensation coefficient is:
when the judging module determines that the error is greater than the preset error, updating the compensation coefficient to the update coefficient to obtain the updated compensation coefficient.

9. The CM according to claim 8, wherein the non-linear frequency component comprises at least one of a 3^{rd} order inter-modulation component and a 5^{th} order inter-modulation component.

10. The CM according to claim 9, wherein the compensation signal comprises an OFDM signal, and the recovery module comprises an OFDM signal recovery submodule and a first determining submodule, wherein:
the OFDM signal recovery submodule is configured to perform signal recovery processing on the OFDM signal to obtain a first signal; and
the first determining submodule is configured to determine the first signal as the reference signal.

11. The CM according to claim 9, wherein the compensation signal comprises an OFDM signal and a QAM signal, and the recovery module comprises an OFDM signal recovery submodule, a QAM signal recovery submodule, and a second determining submodule, wherein:
the OFDM signal recovery submodule is configured to perform signal recovery processing on the OFDM signal to obtain a first signal;
the QAM signal recovery submodule is configured to perform signal recovery processing on the QAM signal to obtain a second signal; and
the second determining submodule is configured to determine, as the reference signal, a signal obtained by combining the first signal and the second signal.

12. The CM according to claim 10 or 11, wherein the OFDM signal comprises OFDM sub-signals carried on at least one OFDM channel, and a specific manner in which the OFDM signal recovery submodule performs signal recovery processing on the OFDM signal to obtain the first signal is:
performing DDC processing on an OFDM sub-signal carried on each OFDM channel, and performing FFT on a signal obtained through the DDC processing, to obtain a carrier signal;
performing FEQ processing on the carrier signal by using a pilot signal, and performing hard decision processing on a signal obtained through the FEQ processing, to obtain a frequency domain signal, wherein the pilot signal comprises at least one frequency of a signal sent by an optical node device to the CM;
performing IFFT on the frequency domain signal, and performing digital up-conversion DUC processing on a signal obtained through the IFFT processing, to obtain a first sub-signal; and
combining all first sub-signals to obtain the first signal.

13. The CM according to claim 11, wherein the QAM signal comprises QAM sub-signals carried on at least one QAM channel, and a specific manner in which the QAM signal recovery submodule performs signal recovery processing on the QAM signal to obtain the second signal is:
performing DDC processing on a QAM sub-signal carried on each QAM channel to obtain a baseband signal;
performing TEQ processing on the baseband signal, and performing hard decision processing on a signal obtained through the TEQ processing, to obtain a time domain signal;
performing DUC processing on the time domain signal to obtain a second sub-signal; and
combining all second sub-signals to obtain the second signal.

14. The CM according to any one of claims 1 to 13, wherein the CM further comprises:
a determining module, configured to determine the compensation coefficient as a stable compensation coefficient when the judging module determines that the error is less than or equal to the preset error, wherein the stable compensation coefficient is used to perform non-linear compensation on a digital signal in the current compensation coefficient update period.

## Patentansprüche

1. Signalverarbeitungsverfahren, angewandt auf ein Hybrid-Glasfaser-Koaxial-Netz, HFC-Netz, wobei das HFC-Netz wenigstens einen Leistungsverstärker und ein Kabelmodem, CM, umfasst und wobei das Verfahren Folgendes umfasst:
Empfangen (301) durch das CM eines verzerrten Signals, wobei das verzerrte Signal eine nichtlineare Frequenzkomponente, die erzeugt wird, nachdem der wenigstens eine Leistungsverstärker ein Signal verstärkt hat, enthält;
Umsetzen (302) durch das CM des verzerrten Signals in ein digitales Signal; und
Ausführen (303) durch das CM einer nichtlinearen Kompensation des digitalen Signals unter Verwendung eines Kompensationskoeffizienten, um ein Kompensationssignal zu erhalten;
wobei das Verfahren nach dem Ausführen durch das CM der nichtlinearen Kompensation des digitalen Signals unter Verwendung eines Kompensationskoeffizienten, um ein Kompensationssignal zu erhalten, ferner Folgendes umfasst:
Ausführen durch das CM von Signalwiedergewinnungsverarbeitung des Kompensationssignals, um ein Referenzsignal zu erhalten;
Trainieren durch das CM des Kompensationskoeffizienten unter Verwendung eines Fehlersignals zwischen dem Referenzsignal und dem Kompensationssignal, um einen Aktualisierungskoeffizienten zu erhalten; und
Aktualisieren durch das CM des Kompensationskoeffizienten auf den Aktualisierungskoeffizienten, um einen aktualisierten Kompensationskoeffizienten zu erhalten, wobei der aktualisierte Kompensationskoeffizient verwendet wird, um eine nichtlineare Kompensation an einer nächsten Gruppe von digitalen Signalen auszuführen;
wobei das Verfahren nach dem Trainieren durch das CM des Kompensationskoeffizienten unter Verwendung eines Fehlersignals zwischen dem Referenzsignal und dem Kompensationssignal, um einen Aktualisierungskoeffizienten zu erhalten, ferner Folgendes umfasst:
Erhalten durch das CM eines vorher aufgezeichneten historischen Fehlersignals, wobei das historische Fehlersignal ein Fehlersignal zwischen einem historischen Referenzsignal, das durch Ausführen einer nichtlinearen Kompensation an einer vorherigen Gruppe von digitalen Signalen in einer aktuellen Kompensationskoeffizienten-Aktualisierungszeitspanne erhalten wurde, und einem historischen Kompensationssignal ist; und
Bestimmen durch das CM, ob ein Fehler zwischen dem Fehlersignal und dem historischen Fehlersignal größer ist als ein voreingestellter Fehler; und
das Aktualisieren durch das CM des Kompensationskoeffizienten auf den Aktualisierungskoeffizienten, um einen aktualisierten Kompensationskoeffizienten zu erhalten, Folgendes umfasst:
falls der Fehler größer ist als der voreingestellte Fehler, Aktualisieren durch das CM des Kompensationskoeffizienten auf den Aktualisierungskoeffizienten, um den aktualisierten Kompensationskoeffizienten zu erhalten.

2. Verfahren nach Anspruch 1, wobei die nichtlineare Frequenzkomponente wenigstens eine einer Intermodulationskomponente 3. Ordnung und einer Intermodulationskomponente 5. Ordnung umfasst.

3. Verfahren nach Anspruch 1, wobei das Kompensationssignal ein Signal mit orthogonalem Frequenzmultiplexieren, OFDM-Signal, umfasst, und das Ausführen durch das CM der Signalwiedergewinnungsverarbeitung des Kompensationssignals, um ein Referenzsignal zu erhalten, Folgendes umfasst:
Ausführen durch das CM von Signalwiedergewinnungsverarbeitung des OFDM-Signals, um ein erstes Signal zu erhalten; und
Bestimmen durch das CM des ersten Signals als das Referenzsignal.

4. Verfahren nach Anspruch 1, wobei das Kompensationssignal ein OFDM-Signal und ein Quadraturamplitudenmodulations-Signal, QAM-Signal, umfasst, und das Ausführen durch das CM der Signalwiedergewinnungsverarbeitung des Kompensationssignals, um ein Referenzsignal zu erhalten, Folgendes umfasst:
Ausführen durch das CM einer Signalwiedergewinnungsverarbeitung des OFDM-Signals, um ein erstes Signal zu erhalten, und Ausführen einer Signalwiedergewinnungsverarbeitung des QAM-Signals, um ein zweites Signal zu erhalten; und
Bestimmen durch das CM eines Signals, das durch Kombination des ersten und des zweiten Signals erhalten wird, als das Referenzsignal.

5. Verfahren nach Anspruch 3 oder 4, wobei das OFDM-Signal OFDM-Teilsignale, die auf wenigstens einem OFDM-Kanal geführt werden, umfasst und das Ausführen durch das CM von Signalwiedergewinnungsverarbeitung des OFDM-Signals, um ein erstes Signal zu erhalten, Folgendes umfasst:
Ausführen durch das CM einer digitalen Abwärtsumsetzungs-Verarbeitung, DDC-Verarbeitung, eines OFDM-Teilsignals, das auf jedem OFDM-Kanal geführt wird, und Ausführen einer schnellen Fourier-Transformation, FFT, eines durch die DDC-Verarbeitung erhaltenen Signals, um ein Trägersignal zu erhalten;
Ausführen durch das CM einer Frequenzdomänenentzerrungs-Verarbeitung, FEQ-Verarbeitung, des Trägersignals unter Verwendung eines Pilotsignals, und Ausführen einer harten Entscheidungsverarbeitung eines durch die FEQ-Verarbeitung erhaltenen Signals, um ein Frequenzdomänensignal zu erhalten, wobei das Pilotsignal wenigstens eine Frequenz eines durch eine optische Knotenvorrichtung an das CM gesendeten Signals umfasst;
Ausführen durch das CM einer inversen schnellen Fourier-Transformation, IFFT, des Frequenzdomänensignals und Ausführen einer digitalen Aufwärtsumsetzungs-Verarbeitung, DUC-Verarbeitung, eines durch die IFFT-Verarbeitung erhaltenen Signals, um ein erstes Teilsignal zu erhalten; und
Kombinieren durch das CM aller ersten Teilsignale, um das erste Signal zu erhalten.

6. Verfahren nach Anspruch 4,
wobei das QAM-Signal QAM-Teilsignale enthält, die auf wenigstens einem QAM-Kanal geführt werden, und das Ausführen durch das CM der Signalwiedergewinnungsverarbeitung des QAM-Signals, um ein zweites Signal zu erhalten, Folgendes umfasst:
Ausführen durch das CM der DDC-Verarbeitung eines QAM-Teilsignals, das auf jedem QAM-Kanal geführt wird, um ein Basisbandsignal zu erhalten;
Ausführen durch das CM einer Zeitdomänenentzerrungs-Verarbeitung, TEQ-Verarbeitung, des Basisbandsignals und Ausführen einer harten Entscheidungsverarbeitung eines durch die TEQ-Verarbeitung erhaltenen Signals, um ein Zeitdomänensignal zu erhalten;
Ausführen durch das CM einer DUC-Verarbeitung des Zeitdomänensignals, um ein zweites Teilsignal zu erhalten; und
Kombinieren durch das CM aller zweiten Teilsignale, um das zweite Signal zu erhalten.

7. Verfahren nach einem der Ansprüche 1 bis 6, wobei das Verfahren ferner Folgendes umfasst:
Bestimmen durch das CM des Kompensationskoeffizienten als einen stabilen Kompensationskoeffizienten, falls der Fehler kleiner als der oder gleich dem voreingestellten Fehler ist, wobei der stabile Kompensationskoeffizient verwendet wird, um eine nichtlineare Kompensation eines digitalen Signals in der aktuellen Kompensationskoeffizienten-Aktualisierungszeitspanne auszuführen.

8. CM, das auf ein HFC-Netz angewandt wird, wobei das HFC-Netz ferner wenigstens einen Leistungsverstärker umfasst und das CM Folgendes umfasst:
ein Empfangsmodul (601), das konfiguriert ist, ein verzerrtes Signal zu empfangen, wobei das verzerrte Signal eine nichtlineare Frequenzkomponente, die erzeugt wird, nachdem der wenigstens eine Leistungsverstärker ein Signal verstärkt hat, enthält;
ein Umsetzungsmodul (602), das konfiguriert ist, das verzerrte Signal in ein digitales Signal umzusetzen; und
ein Kompensationsmodul (603), das konfiguriert ist, eine nichtlineare Kompensation des digitalen Signals unter Verwendung eines Kompensationskoeffizienten auszuführen, um ein Kompensationssignal zu erhalten;
wobei das CM ferner Folgendes umfasst:
ein Wiedergewinnungsmodul (604), das konfiguriert ist, eine Signalwiedergewinnungsverarbeitung des Kompensationssignals auszuführen, um ein Referenzsignal zu erhalten;
ein Trainingsmodul (605), das konfiguriert ist, den Kompensationskoeffizienten unter Verwendung eines Fehlersignals zwischen dem Referenzsignal und dem Kompensationssignal zu trainieren, um einen Aktualisierungskoeffizienten zu erhalten; und
ein Aktualisierungsmodul (606), das konfiguriert ist, den Kompensationskoeffizienten auf den Aktualisierungskoeffizienten zu aktualisieren, um einen aktualisierten Kompensationskoeffizienten zu erhalten, wobei der aktualisierte Kompensationskoeffizient verwendet wird, um eine nichtlineare Kompensation an einer nächsten Gruppe von digitalen Signalen auszuführen; wobei das CM ferner Folgendes umfasst:
ein Erhaltemodul, das konfiguriert ist, ein vorher aufgezeichnetes historisches Fehlersignal zu erhalten, wobei das historische Fehlersignal ein Fehlersignal zwischen einem historischen Referenzsignal, das durch Ausführen einer nichtlinearen Kompensation an einer vorherigen Gruppe von digitalen Signalen in einer aktuellen Kompensationskoeffizienten-Aktualisierungszeitspanne erhalten wurde, und einem historischen Kompensationssignal ist; und
ein Beurteilungsmodul, das konfiguriert ist zu bestimmen, ob ein Fehler zwischen dem Fehlersignal und dem historischen Fehlersignal größer ist als ein voreingestellter Fehler;
wobei eine spezifische Art und Weise, in der das Aktualisierungsmodul den Kompensationskoeffizienten auf den Aktualisierungskoeffizienten aktualisiert, um den aktualisierten Kompensationskoeffizienten zu erhalten, Folgendes ist:
wenn das Beurteilungsmodul bestimmt, dass der Fehler größer ist als der voreingestellte Fehler, Aktualisieren des Kompensationskoeffizienten auf den Aktualisierungskoeffizienten, um den aktualisierten Kompensationskoeffizienten zu erhalten.

9. CM nach Anspruch 8, wobei die nichtlineare Frequenzkomponente wenigstens eine einer Intermodulationskomponente 3. Ordnung und einer Intermodulationskomponente 5. Ordnung umfasst.

10. CM nach Anspruch 9, wobei das Kompensationssignal ein OFDM-Signal umfasst, und das Wiedergewinnungsmodul ein OFDM-Signalwiedergewinnungsuntermodul und ein erstes Bestimmungsuntermodul umfasst, wobei:
das OFDM-Signalwiedergewinnungsuntermodul konfiguriert ist, eine Signalwiedergewinnungsverarbeitung des OFDM-Signals auszuführen, um ein erstes Signal zu erhalten; und
das erste Bestimmungsuntermodul konfiguriert ist, das erste Signal als das Referenzsignal zu bestimmen.

11. CM nach Anspruch 9, wobei das Kompensationssignal ein OFDM-Signal und ein QAM-Signal umfasst und das Wiedergewinnungsmodul ein OFDM-Signalwiedergewinnungsuntermodul, ein QAM-Signalwiedergewinnungsuntermodul und ein zweites Bestimmungsuntermodul umfasst, wobei:
das OFDM-Signalwiedergewinnungsuntermodul konfiguriert ist, eine Signalwiedergewinnungsverarbeitung des OFDM-Signals auszuführen, um ein erstes Signal zu erhalten;
das QAM-Signalwiedergewinnungsuntermodul konfiguriert ist, eine Signalwiedergewinnungsverarbeitung des QAM-Signals auszuführen, um ein zweites Signal zu erhalten; und
das zweite Bestimmungsuntermodul konfiguriert ist, ein Signal, das durch Kombinieren des ersten Signals und des zweiten Signals erhalten wird, als das Referenzsignal zu bestimmen.

12. CM nach Anspruch 10 oder 11, wobei das OFDM-Signal OFDM-Teilsignale umfasst, die auf wenigstens einem OFDM-Kanal geführt werden, und eine spezifische Art und Weise, in der das OFDM-Signalwiedergewinnungsuntermodul eine Signalwiedergewinnungsverarbeitung des OFDM-Signals ausführt, um das erste Signal zu erhalten, Folgendes ist:
Ausführen von DDC-Verarbeitung eines OFDM-Teilsignals, das auf jedem OFDM-Kanal geführt wird, und Ausführen von FFT eines durch die DDC-Verarbeitung erhaltenen Signals, um ein Trägersignal zu erhalten;
Ausführen von FEQ-Verarbeitung des Trägersignals unter Verwendung eines Pilotsignals, und Ausführen einer harten Entscheidungsverarbeitung eines durch die FEQ-Verarbeitung erhaltenen Signals, um ein Frequenzdomänensignal zu erhalten, wobei das Pilotsignal wenigstens eine Frequenz eines durch eine optische Knotenvorrichtung an das CM gesendeten Signals umfasst;
Ausführen von IFFT des Frequenzdomänensignals und Ausführen einer digitalen Aufwärtsumsetzungs-Verarbeitung, DUC-Verarbeitung, eines durch die IFFT-Verarbeitung erhaltenen Signals, um ein erstes Teilsignal zu erhalten; und
Kombinieren aller ersten Teilsignale, um das erste Signal zu erhalten.

13. CM nach Anspruch 11, wobei das QAM-Signal QAM-Teilsignale umfasst, die auf wenigstens einem QAM-Kanal geführt werden, und eine spezifische Art und Weise, in der das QAM-Signalwiedergewinnungsuntermodul eine Signalwiedergewinnungsverarbeitung des QAM-Signals ausführt, um das zweite Signal zu erhalten, Folgendes ist:
Ausführen von DDC-Verarbeitung eines QAM-Teilsignals, das auf jedem QAM-Kanal geführt wird, um ein Basisbandsignal zu erhalten;
Ausführen von TEQ-Verarbeitung des Basisbandsignals und Ausführen einer harten Entscheidungsverarbeitung eines durch die TEQ-Verarbeitung erhaltenen Signals, um ein Zeitdomänensignal zu erhalten;
Ausführen von DUC-Verarbeitung des Zeitdomänensignals, um ein zweites Teilsignal zu erhalten; und
Kombinieren aller zweiten Teilsignale, um das zweite Signal zu erhalten.

14. CM nach einem der Ansprüche 8 bis 13, wobei das CM ferner Folgendes umfasst:
ein Bestimmungsmodul, das konfiguriert ist, den Kompensationskoeffizienten als einen stabilen Kompensationskoeffizienten zu bestimmen, wenn das Beurteilungsmodul bestimmt, dass der Fehler kleiner als der oder gleich dem voreingestellten Fehler ist, wobei der stabile Kompensationskoeffizient verwendet wird, um eine nichtlineare Kompensation eines digitalen Signals in der aktuellen Kompensationskoeffizienten-Aktualisierungszeitspanne auszuführen.

## Revendications

1. Procédé de traitement de signal, appliqué à un réseau hybride fibre coaxial, HFC, le réseau HFC comprenant au moins un amplificateur de puissance et un modem câble, CM, et le procédé comprenant :
la réception (301), par le CM, d'un signal distordu, le signal distordu comprenant une composante de fréquence non linéaire générée après l'amplification d'un signal par l'au moins un amplificateur de puissance ;
la conversion (302), par le CM, du signal distordu en un signal numérique ; et
la réalisation (303), par le CM au moyen d'un coefficient de compensation, d'une compensation non linéaire sur le signal numérique afin d'obtenir un signal de compensation ;
le procédé comprenant en outre, après la réalisation, par le CM au moyen d'un coefficient de compensation, d'une compensation non linéaire sur le signal numérique afin d'obtenir un signal de compensation :
la réalisation, par le CM, d'un traitement de récupération de signal sur le signal de compensation afin d'obtenir un signal de référence ;
l'entraînement, par le CM au moyen d'un signal d'erreur entre le signal de référence et le signal de compensation, du coefficient de compensation afin d'obtenir un coefficient de mise à jour ; et
la mise à jour, par le CM, du coefficient de compensation pour le coefficient de mise à jour afin d'obtenir un coefficient de compensation mis à jour, le coefficient de compensation mis à jour étant utilisé pour réaliser une compensation non linéaire sur un groupe suivant de signaux numériques ;
le procédé comprenant en outre, après l'entraînement, par le CM au moyen d'un signal d'erreur entre le signal de référence et le signal de compensation, du coefficient de compensation afin d'obtenir un coefficient de mise à jour :
l'obtention, par le CM, d'un signal d'erreur historique préenregistré, le signal d'erreur historique étant un signal d'erreur entre un signal de référence historique, obtenu par réalisation d'une compensation non linéaire sur un groupe précédent de signaux numériques dans une période en cours de mise à jour de coefficient de compensation, et un signal de compensation historique ; et
la détermination, par le CM, si une erreur entre le signal d'erreur et le signal d'erreur historique est supérieure ou non à une erreur prédéfinie ; et
la mise à jour, par le CM, du coefficient de compensation pour le coefficient de mise à jour afin d'obtenir un coefficient de compensation mis à jour comprenant :
si l'erreur est supérieure à l'erreur prédéfinie, la mise à jour, par le CM, du coefficient de compensation pour le coefficient de mise à jour afin d'obtenir le coefficient de compensation mis à jour.

2. Procédé selon la revendication 1, dans lequel la composante de fréquence non linéaire comprend une composante d'intermodulation d'ordre 3 et/ou une composante d'intermodulation d'ordre 5.

3. Procédé selon la revendication 1, dans lequel le signal de compensation comprend un signal de multiplexage par répartition orthogonale de la fréquence, OFDM, et la réalisation, par le CM, d'un traitement de récupération de signal sur le signal de compensation afin d'obtenir un signal de référence comprend :
la réalisation, par le CM, d'un traitement de récupération de signal sur le signal OFDM afin d'obtenir un premier signal ; et
la détermination, par le CM, du premier signal comme étant le signal de référence.

4. Procédé selon la revendication 1, dans lequel le signal de compensation comprend un signal OFDM et un signal de modulation d'amplitude en quadrature, QAM, et la réalisation, par le CM, d'un traitement de récupération de signal sur le signal de compensation afin d'obtenir un signal de référence comprend :
la réalisation, par le CM, d'un traitement de récupération de signal sur le signal OFDM afin d'obtenir un premier signal, et la réalisation d'un traitement de récupération de signal sur le signal QAM afin d'obtenir un deuxième signal ; et
la détermination, par le CM comme étant le signal de référence, d'un signal obtenu par combinaison du premier signal et du deuxième signal.

5. Procédé selon la revendication 3 ou 4, dans lequel le signal OFDM comprend des sous-signaux OFDM véhiculés sur au moins un canal OFDM, et la réalisation, par le CM, d'un traitement de récupération de signal sur le signal OFDM afin d'obtenir un premier signal comprend :
la réalisation, par le CM, d'un traitement de conversion numérique par abaissement de fréquence, DDC, sur un sous-signal OFDM véhiculé sur chaque canal OFDM, et la réalisation d'une transformée de Fourier rapide, FFT, sur un signal obtenu au travers du traitement DDC, afin d'obtenir un signal de porteuse ;
la réalisation, par le CM, d'un traitement d'égalisation dans le domaine fréquentiel, FEQ, sur le signal de porteuse au moyen d'un signal pilote, et la réalisation d'un traitement par décision dure sur un signal obtenu au travers du traitement FEQ, afin d'obtenir un signal dans le domaine fréquentiel, le signal pilote comprenant au moins une fréquence d'un signal envoyé par un dispositif noeud optique au CM ;
la réalisation, par le CM, d'une transformée de Fourier rapide inverse, IFFT, sur le signal dans le domaine fréquentiel, et la réalisation d'un traitement de conversion numérique par élévation de fréquence, DUC, sur un signal obtenu au travers du traitement IFFT, afin d'obtenir un premier sous-signal ; et
la combinaison, par le CM, de tous les premiers sous-signaux afin d'obtenir le premier signal.

6. Procédé selon la revendication 4,
dans lequel le signal QAM comprend des sous-signaux QAM véhiculés sur au moins un canal QAM, et la réalisation, par le CM, d'un traitement de récupération de signal sur le signal QAM afin d'obtenir un deuxième signal comprend :
la réalisation, par le CM, d'un traitement DDC sur un sous-signal QAM véhiculé sur chaque canal QAM afin d'obtenir un signal en bande de base ;
la réalisation, par le CM, d'un traitement d'égalisation dans le domaine temporel, TEQ, sur le signal en bande de base, et la réalisation d'un traitement par décision dure sur un signal obtenu au travers du traitement TEQ, afin d'obtenir un signal dans le domaine temporel ;
la réalisation, par le CM, d'un traitement DUC sur le signal dans le domaine temporel afin d'obtenir un deuxième sous-signal ; et
la combinaison, par le CM, de tous les deuxièmes sous-signaux afin d'obtenir le deuxième signal.

7. Procédé selon l'une quelconque des revendications 1 à 6, le procédé comprenant en outre : la détermination, par le CM, du coefficient de compensation comme étant un coefficient de compensation stable si l'erreur est inférieure ou égale à l'erreur prédéfinie, le coefficient de compensation stable étant utilisé pour réaliser une compensation non linéaire sur un signal numérique dans la période en cours de mise à jour de coefficient de compensation.

8. CM, appliqué à un réseau HFC, le réseau HFC comprenant en outre au moins un amplificateur de puissance, et le CM comprenant :
un module de réception (601), configuré pour recevoir un signal distordu, le signal distordu comprenant une composante de fréquence non linéaire générée après l'amplification d'un signal par l'au moins un amplificateur de puissance ;
un module de conversion (602), configuré pour convertir le signal distordu en un signal numérique ; et
un module de compensation (603), configuré pour réaliser, au moyen d'un coefficient de compensation, une compensation non linéaire sur le signal numérique afin d'obtenir un signal de compensation ;
le CM comprenant en outre :
un module de récupération (604), configuré pour réaliser un traitement de récupération de signal sur le signal de compensation afin d'obtenir un signal de référence ;
un module d'entraînement (605), configuré pour entraîner, au moyen d'un signal d'erreur entre le signal de référence et le signal de compensation, le coefficient de compensation afin d'obtenir un coefficient de mise à jour ; et
un module de mise à jour (606), configuré pour mettre à jour le coefficient de compensation pour le coefficient de mise à jour afin d'obtenir un coefficient de compensation mis à jour, le coefficient de compensation mis à jour étant utilisé pour réaliser une compensation non linéaire sur un groupe suivant de signaux numériques ;
le CM comprenant en outre :
un module d'obtention, configuré pour obtenir un signal d'erreur historique préenregistré, le signal d'erreur historique étant un signal d'erreur entre un signal de référence historique, obtenu par réalisation d'une compensation non linéaire sur un groupe précédent de signaux numériques dans une période en cours de mise à jour de coefficient de compensation, et un signal de compensation historique ; et
un module d'évaluation, configuré pour déterminer si une erreur entre le signal d'erreur et le signal d'erreur historique est supérieure ou non à une erreur prédéfinie ; et
un mode particulier de mise à jour, par le module de mise à jour, du coefficient de compensation pour le coefficient de mise à jour afin d'obtenir le coefficient de compensation mis à jour étant le suivant :
lorsque le module d'évaluation détermine que l'erreur est supérieure à l'erreur prédéfinie, la mise à jour du coefficient de compensation pour le coefficient de mise à jour afin d'obtenir le coefficient de compensation mis à jour.

9. CM selon la revendication 8, dans lequel la composante de fréquence non linéaire comprend une composante d'intermodulation d'ordre 3 et/ou une composante d'intermodulation d'ordre 5.

10. CM selon la revendication 9, dans lequel le signal de compensation comprend un signal OFDM, et le module de récupération comprend un sous-module de récupération de signal OFDM et un premier sous-module de détermination,
le sous-module de récupération de signal OFDM étant configuré pour réaliser un traitement de récupération de signal sur le signal OFDM afin d'obtenir un premier signal ; et
le premier sous-module de détermination étant configuré pour déterminer le premier signal comme étant le signal de référence.

11. CM selon la revendication 9, dans lequel le signal de compensation comprend un signal OFDM et un signal QAM, et le module de récupération comprend un sous-module de récupération de signal OFDM, un sous-module de récupération de signal QAM et un deuxième sous-module de détermination,
le sous-module de récupération de signal OFDM étant configuré pour réaliser un traitement de récupération de signal sur le signal OFDM afin d'obtenir un premier signal ;
le sous-module de récupération de signal QAM étant configuré pour réaliser un traitement de récupération de signal sur le signal QAM afin d'obtenir un deuxième signal ; et
le deuxième sous-module de détermination étant configuré pour déterminer, comme étant le signal de référence, un signal obtenu par combinaison du premier signal et du deuxième signal.

12. CM selon la revendication 10 ou 11, dans lequel le signal OFDM comprend des sous-signaux OFDM véhiculés sur au moins un canal OFDM, et un mode particulier de réalisation, par le sous-module de récupération de signal OFDM, d'un traitement de récupération de signal sur le signal OFDM afin d'obtenir le premier signal est le suivant :
la réalisation d'un traitement DDC sur un sous-signal OFDM véhiculé sur chaque canal OFDM, et la réalisation d'une FFT sur un signal obtenu au travers du traitement DDC, afin d'obtenir un signal de porteuse ;
la réalisation d'un traitement FEQ sur le signal de porteuse au moyen d'un signal pilote, et la réalisation d'un traitement par décision dure sur un signal obtenu au travers du traitement FEQ, afin d'obtenir un signal dans le domaine fréquentiel, le signal pilote comprenant au moins une fréquence d'un signal envoyé par un dispositif noeud optique au CM ;
la réalisation d'une IFFT sur le signal dans le domaine fréquentiel, et la réalisation d'un traitement de conversion numérique par élévation de fréquence, DUC, sur un signal obtenu au travers du traitement IFFT, afin d'obtenir un premier sous-signal ; et
la combinaison de tous les premiers sous-signaux afin d'obtenir le premier signal.

13. CM selon la revendication 11, dans lequel le signal QAM comprend des sous-signaux QAM véhiculés sur au moins un canal QAM, et un mode particulier de réalisation, par le sous-module de récupération de signal QAM, d'un traitement de récupération de signal sur le signal QAM afin d'obtenir le deuxième signal est le suivant :
la réalisation d'un traitement DDC sur un sous-signal QAM véhiculé sur chaque canal QAM afin d'obtenir un signal en bande de base ;
la réalisation d'un traitement TEQ sur le signal en bande de base, et la réalisation d'un traitement par décision dure sur un signal obtenu au travers du traitement TEQ, afin d'obtenir un signal dans le domaine temporel ;
la réalisation d'un traitement DUC sur le signal dans le domaine temporel afin d'obtenir un deuxième sous-signal ; et
la combinaison de tous les deuxièmes sous-signaux afin d'obtenir le deuxième signal.

14. CM selon l'une quelconque des revendications 8 à 13, le CM comprenant en outre :
un module de détermination, configuré pour déterminer le coefficient de compensation comme étant un coefficient de compensation stable si le module d'évaluation détermine que l'erreur est inférieure ou égale à l'erreur prédéfinie, le coefficient de compensation stable étant utilisé pour réaliser une compensation non linéaire sur un signal numérique dans la période en cours de mise à jour de coefficient de compensation.
